# EUROPÄISCHE PATENTSCHRIFT

(11) **EP 3 783 940 B1**
(45) Veröffentlichungstag und Bekanntmachung des Hinweises auf die Patenterteilung: **07.01.2026**
(21) Anmeldenummer: 20201697.8
(22) Anmeldetag: 20.07.2018
(51) Int. Cl.: H04L 9/40, H04W 12/06, H04W 4/80

(54) **METHOD FOR AUTHENTICATING A USER AGAINST A SERVICE PROVIDER AND AUTHENTICATION SYSTEM**
PROCÉDÉ D'AUTHENTIFICATION D'UN UTILISATEUR CONTRE UN FOURNISSEUR DE SERVICES ET SYSTÈME D'AUTHENTIFICATION
VERFAHREN ZUR AUTHENTISIERUNG EINES NUTZERS GEGENÜBER EINEM DIENSTEANBIETER UND AUTHENTISIERUNGSEINRICHTUNG

(30) Priorität: 25.07.2017 DE 102017212696
(43) Veröffentlichungstag der Anmeldung: 24.02.2021
(62) Teilanmeldung aus: 18184719.5
(73) Patentinhaber: Bundesdruckerei GmbH, 10969 Berlin (DE)
(72) Erfinder: Schwarz, Carsten, 13465 Berlin (DE); Hill, Jan, 10249 Berlin (DE)
(74) Vertreter: Witte, Weller und Partner Patentanwälte mbB Stuttgart

(56) Entgegenhaltungen:
- DE-A1- 102010 028 133
- US-A1- 2017 094 513

## Beschreibung

### Technisches Gebiet

Die vorliegende Erfindung betrifft ein Verfahren zur Authentisierung eines Nutzers gegenüber einem Diensteanbieter mittels eines elektronischen Ausweiselements des Nutzers und eine Authentisierungseinrichtung.

### Beschreibung des Standes der Technik

Verfahren zur Authentisierung, d.h. zur Überprüfung der Authentizität eines Nutzers bzw. Kommunikationspartners mittels eines elektronischen Ausweiselements, sowie zur Durchführung derartiger Verfahren geeignete Authentisierungssysteme bzw. -dienste sind bekannt.

Ein bekanntes Beispiel eines elektronischen Ausweiselements ist der von der Bundesrepublik Deutschland ausgegebene elektronische Personalausweis, der einen RFID-Chip enthält, der verschiedene Formen der elektronischen Authentisierung ermöglicht. Der Nutzer dieses Ausweises kann im Internet mittels einer "AusweisApp" genannten Anwendung den gleichen Identitätsnachweis liefern, wie ihn der Ausweis als Sichtdokument außerhalb des Internets bietet. Der Nutzer kann sich somit im elektronischen Geschäfts- bzw. Rechtsverkehr gegenüber Dritten eindeutig und authentisch ausweisen. Ein (privatrechtlicher oder behördlicher) Diensteanbieter, der seinen Kunden die Möglichkeit der Authentisierung mittels des elektronischen Personalausweises anbietet, benötigt hierfür ein von der Vergabestelle für Berechtigungszertifikate ausgestelltes Berechtigungszertifikat. Zudem benötigt er als elektronischen Authentisierungsdienst einen sogenannten eID-Server, den er entweder selbst betreiben oder von externen Dienstleistern mieten kann.

Die DE 10 2010 028133 A1 betrifft ein Verfahren zum Lesen von Attributen aus einem einem Nutzer zugeordneten ID-Token.

In der US 2017/094513 A1 wird ein Identitäts-Management-Verfahren beschrieben, bei dem der Nutzer sich gegenüber Servicestellen ausweisen kann.

Zur Nutzung der elektronischen Ausweisfunktion benötigt der Nutzer an seinem stationären PC (Nutzerendgerät) üblicherweise ein Kartenlesegerät. Eine Kommunikation zwischen Ausweis und einem geeigneten "Smartphone" (Mobiltelefon mit umfangreichen Computer-Funktionalitäten) ist aber auch mittels der sogenannten Nahfeldkommunikation (NFC: englisch "Near Field Communication") möglich.

### Zusammenfassung der Erfindung

Ausgehend hiervon werden erfindungsgemäß ein Verfahren zum Betreiben eines elektronischen Authentisierungsdienstes zur Authentisierung eines Nutzers gegenüber einem Diensteanbieter mittels eines elektronischen Ausweiselements mit den Merkmalen des Anspruchs 1 und eine entsprechende Authentisierungseinrichtung mit den Merkmalen des Anspruchs 5 vorgeschlagen.

Die Erkenntnis der Erfindung liegt darin begründet, zum Aufbau einer gesicherten Verbindung zwischen einem stationären Nutzerendgerät und einem Diensteanbieter mittels Ausweis-Authentisierung anstelle eines nicht stets zur Verfügung stehenden Kartenlesegeräts ein in der Regel vorhandenes mobiles Nutzerendgerät (vulgo Smartphone) zu nutzen. Dadurch ermöglicht es die Erfindung, dass sich ein Nutzer in einer Anwendung, die er an einem klassischen stationären Nutzerendgerät, wie bspw. einem Desktop-PC, nutzt, gegenüber einem die Anwendung anbietenden Diensteanbieter identifizieren bzw. authentisieren kann, ohne dass er über ein (kompatibles) Kartenlesegerät verfügen muss. Vielmehr erfolgt das Auslesen des hoheitlichen Dokuments mittels eines NFC-tauglichen mobilen Endgeräts (Smartphone, Tablet o.dgl.), das über eine Kontaktnummer (Telefonnummer) verfügt. Erfindungsgemäß muss dabei das elektronische Ausweiselement nicht durch das mobile Endgerät direkt ausgelesen werden, sondern das mobile Endgerät dient als Kommunikationsverbindung für einen direkt zwischen den Ausweiselement bzw. dessen Chip und dem Authentisierungsdienst bzw. Authentisierungsserver aufzubauenden sicheren Verbindung.

Der eigentliche (und an sich bekannte) Authentisierungsvorgang erfolgt somit zwischen dem Ausweiselement und dem elektronischen Authentisierungsdienst des Diensteanbieters über einen durch das mobile Endgerät bereitgestellten Kommunikationskanal, während die anschließende authentisierte Transaktionsverbindung zwischen dem Server des Diensteanbieters und dem stationären Endgerät des Nutzers zustande kommt.

Um den Authentisierungsvorgang anzustoßen, teilt der Nutzer dem Diensteanbieter die Telefonnummer/Kontaktnummer des fraglichen mobilen Endgeräts (Mobilnummer) mit. Daraufhin werden auf dem Server des Diensteanbieters ein Geheimnis sowie ein dem Vorgang zugeordneter Identifizierer erzeugt. Diese werden zusammen mit einem Hyperlink an die übermittelte Mobilnummer übermittelt. Bspw. können das Geheimnis und/oder der Identifizierer in den Hyperlink integriert sein.

Der übermittelte Hyperlink ist zum Aufbau einer sicheren Verbindung mit einem elektronischen Authentisierungsdienst ausgelegt, so dass der Nutzer des empfangenden mobilen Endgeräts in die Lage versetzt wird, anhand des empfangenen Hyperlinks eine derartige sichere Verbindung zwischen seinem mobilen Endgerät und dem Authentisierungsdienst herzustellen. Zudem übermittelt der Nutzer auch das empfangene Geheimnis und den empfangenen Identifizierer an den elektronischen Authentisierungsdienst. Letzteres erfolgt automatisch, wenn das Geheimnis und der Identifizierer wie voranstehend erwähnt in den Hyperlink integriert sind.

Um nun den an sich bekannten Authentisierungsvorgang (bspw. Zwei-Faktor-Authentisierung) gegenüber dem elektronischen Authentisierungsdienst vornehmen zu können, muss der Nutzer lediglich noch eine Kopplung zwischen seinem mobilen Nutzer Endgerät und dem elektronischen Ausweiselement, bspw. mittels Nahfeldkommunikation (NFC), erstellen und das Geheimnis bestätigen. Nach erfolgreicher Authentisierung wird von dem elektronischen Authentisierungsdienst eine Authentisierungsbestätigung zusammen mit dem Identifizierer an den Server des Diensteanbieters gesendet, auf dem ausgehend von der Authentisierungsbestätigung und des Identifizierers ein personalisierter Zugang für den Nutzer zur Inanspruchnahme einer Dienstleistung des Diensteanbieters geöffnet werden kann.

Die vorliegende Beschreibung deckt auch ein Computerprogramm mit Programmcode ab, der dazu geeignet ist, ein erfindungsgemäßes Verfahren auszuführen, wenn das Computerprogramm auf einem Server eines Diensteanbieters bzw. einem Server eines elektronischen Authentisierungsdienstes abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

Figur 1 zeigt in stark schematischer Blockdarstellung ein erfindungsgemäßes System zur Authentisierung eines Nutzers gegenüber einem Diensteanbieter mittels eines elektronischen Ausweiselements des Nutzers.
Figur 2 zeigt stark schematisiert eine Ablaufübersicht eines erfindungsgemäßen Verfahrens.

### Ausführliche Beschreibung

Gleiche und ähnliche in den einzelnen Figuren dargestellte Merkmale sind mit gleichen Bezugszeichen bezeichnet.

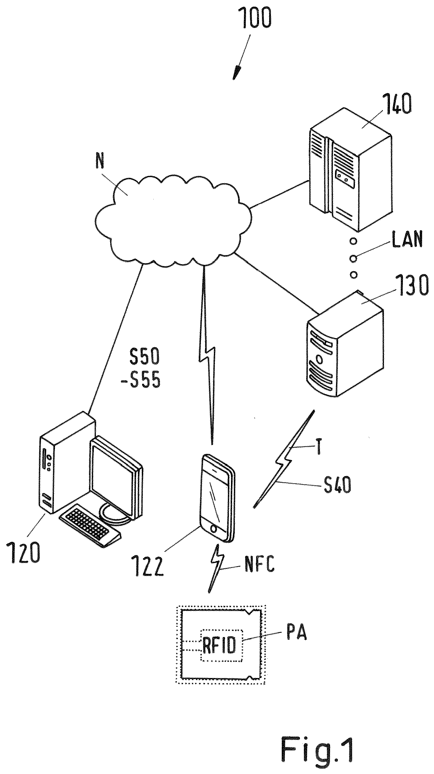

Figur 1 zeigt in stark schematisierter Blockdarstellung eine erfindungsgemäße Authentisierungseinrichtung 100. Die Authentisierungseinrichtung 100 dient zur Authentisierung eines Nutzers gegenüber einem Diensteanbieter mittels eines elektronischen Ausweiselements PA des Nutzers.

Die Authentisierungseinrichtung 100 umfasst nutzerseitig neben dem elektronischen Ausweiselements PA ein stationäres Nutzerendgerät 120 und ein mobiles Nutzerendgerät 122, das mit dem elektronischen Ausweiselement PA koppelbar ist. Diese Kopplung erfolgt wie in dem dargestellten Ausführungsbeispiel mittels sogenannter Nahfeldkommunikation NFC. Bei dem elektronischen Ausweiselement PA handelt es sich bspw. um einen elektronischen Personalausweis mit einem RFID-Chip, wie er bspw. von den Behörden der Bundesrepublik Deutschland ausgegeben wird.

Im Sinne der vorliegenden Erfindung bezeichnet der Begriff des elektronischen Ausweiselements jeglichen elektronischen Ausweis, in dem Funktionen zur elektronischen Authentisierung gegenüber Dritten zum Beispiel im Internet implementiert sind. Bei einem stationären Nutzerendgerät handelt es sich bspw. um einen Tischrechner oder PC, auch einschließlich von Laptopcomputern, und bei einem mobilen Nutzerendgerät handelt es sich bspw. um ein Mobiltelefon oder ein sogenanntes Tablet.

Anbieterseitig umfasst die erfindungsgemäße Authentisierungseinrichtung 100 einen Diensteanbieter-Server 130 und einen Authentisierungsserver 140.

Diensteanbieter, die ihren Kunden (Nutzern) die Möglichkeit der Authentisierung per elektronischem Ausweiselement anbieten, müssen sich zunächst gegenüber dem Ausweiselements mit einem Berechtigungszertifikat authentisieren und die Berechtigung zum Zugriff auf bestimmte Datenfelder des Ausweiselements nachweisen. Zur Kommunikation dem Ausweiselement benötigt der Diensteanbieter einen elektronischen Authentisierungsdienst (auch "eID-Server" genannt), der die Kommunikation mit dem Personalausweis betreibt. Diesen Authentisierungsserver kann der Diensteanbieter entweder selbst betreiben oder von externen Dienstleistern mieten.

Ein "Authentisierungsserver" ist somit im Sinne der vorliegenden Erfindung eine Vorrichtung, in der ein elektronischer Authentisierungsdienst zur Kommunikation mit einem elektronischen Ausweiselements einerseits und einem den Authentisierungsserver betreibenden bzw. mietenden Diensteanbieters andererseits implementiert ist.

Die einzelnen Komponenten der erfindungsgemäßen Authentisierungseinrichtung kommunizieren bspw. über ein Kommunikationsnetzwerk N wie das Internet bzw. über eine Mobilfunkverbindung T bzw. über die bereits erwähnte Nahfeldkommunikation NFC o.dgl.

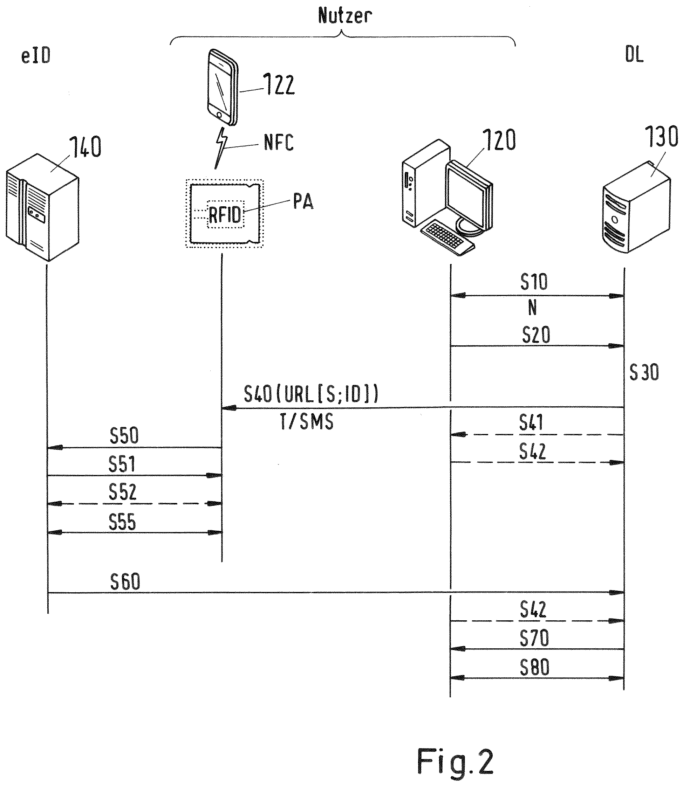

In dem dargestellten Ausführungsbeispiel wird zwischen dem stationären Nutzerendgerät 120 und dem Server 130 des Diensteanbieters eine Verbindung bspw. über das Internet N hergestellt (S10, vgl. Figur 2). Dabei kann es sich bspw. um den Besuch einer Einkaufs-Website, einer Behörden-Website o.dgl. durch den Nutzer handeln.

Zur Initialisierung eines Authentisierungprozesses gemäß der vorliegenden Erfindung übermittelt der Nutzer über diese Verbindung N eine Kontaktnummer seines mobilen Nutzerendgeräts 122 (wie insbesondere die Mobiltelefonnummer) an den Server 130 des Diensteanbieters DL (S20).

Daraufhin werden auf dem Server 130 des Diensteanbieters DL ein Geheimnis S und ein Identifizierer ID erzeugt (S30), die zusammen mit einem Hyperlink URL an das mobile Nutzerendgerät 122 übermittelt werden (S40). Die Übermittlung erfolgt vorzugsweise über eine Mobilfunkverbindung T, bspw. unter Nutzung von SMS (Kurznachrichtendienst "Short Message Service"). Das Geheimnis S dient dazu, dass der Nutzer später die beiden Sitzungen zwischen seinem stationären Endgerät 120 und dem Server 130 einerseits und zwischen seinem mobilen Endgerät 122 und dem elektronischen Authentisierungsdienst eID auf dem Authentisierungsserver 140 "zusammenführen" kann, beispielsweise unter Vergleichen und/oder Bestätigen der angezeigten Geheimnisse, wie dies nachfolgend beschrieben näher ist.

Bei Schritt S50 baut der Nutzer anhand der übermittelten URL eine Verbindung zwischen seinem mobilen Nutzerendgerät 122 und dem elektronischen Authentisierungsdienst eID auf dem Authentisierungsserver 140 auf. Zudem übermittelt der Nutzer das ihm von dem Diensteanbieter zugesandte Geheimnis S und den Identifizierer ID an den elektronischen Authentisierungsdienst. Das Geheimnis und der Identifizierer können bspw. wie voranstehend bereits erwähnt in die URL integriert sein, so dass eine "automatische" Übermittlung an den elektronischen Authentisierungsdienst erfolgt. Des Weiteren stellt der Nutzer sicher, dass eine funktionsfähige Kopplung zwischen seinem elektronischen Ausweiselement PA und dem mobilen Nutzerendgerät 122 besteht.

Der elektronische Authentisierungsdienst eID (eID-Dienst/eID-Service) meldet sich bei Schritt S51 bei dem mobilen Endgerät an und die sogenannte "Ausweis-App", also die wie voranstehend bereits erwähnt zur Durchführung des an sich bekannten Authentisierungsvorgangs benötigte Softwarelösung auf dem mobilen Endgerät 122, wird gestartet und eine sichere Verbindung zwischen dem Ausweiselement PA und dem Authentisierungsdienst eID aufgebaut.

Optional wird in Schritt S52 dem Nutzer das Geheimnis S auf dem mobilen Nutzerendgerät 122 (explizit) angezeigt, damit dieser das Geheimnis als korrekt und identisch mit dem optional in Schritt S41 auf seinem stationären Endgerät 120 angezeigten Geheimnis bestätigen kann. Die Bestätigung des Geheimnisses kann als separate Einzeleingabe oder auch "implizit" über die Eingabe der PIN (s. nachfolgenden Schritt S55) erfolgen. Optional oder zusätzlich kann eine Bestätigung des Geheimnisses auch von dem stationären Endgerät 120 angefordert werden (Schritt S42).

In Schritt S55 wird der an sich bekannte Vorgang der Online-Ausweisfunktion mit Berechtigungszertifikat, PIN-Eingabe, Kryptographie, Auslesen der Daten und zu Beginn einer Anzeige des Geheimnisses (das in diesem Zusammenhang dann bspw. implizit per PIN-Eingabe bestätigt werden kann) durchgeführt.

Nach erfolgreicher Authentisierung erzeugt der eID-Service eine Authentisierungsbestätigung und schickt diese zusammen mit dem Identifizierer an den Server 130 des Diensteanbieters (S60). Mit Erhalt der Authentisierungsbestätigung zusammen mit dem Identifizierer öffnet der Server 130 einen personalisierten Zugang für das stationäre Endgerät 120 (S70), d.h. der Login des Nutzers auf der Website des Diensteanbieters ist erfolgreich abgeschlossen. Unter dem Begriff des "Öffnens" ist dabei jede an sich bekannte Art der Bereitstellung eines Zugangs zu einem über ein elektronisches Netzwerk, insbesondere über das Internet, angebotenen elektronischen Dienst zu verstehen, wie er gemeinhin mit dem Begriff des "Login" bezeichnet wird. Dies kann bspw. das Zuordnen einer eindeutigen Kennung für den Nutzer umfassen. Die Kommunikation zwischen dem Diensteanbieter-Server 130 und dem Authentisierungsserver 140 kann bspw. über eine (gesicherte) Internetverbindung N oder über ein eigenes/proprietäres Netzwerk, wie bspw. ein LAN (Local Area Network) erfolgen.

In der optionalen Variante, die eine Bestätigung des auf dem stationären Endgerät angezeigten Geheimnisses (Schritt S41) fordert, kann die Bestätigung durch den Nutzer vor oder nach der Übermittlung der Authentisierungsbestätigung in Schritt S60 erfolgen (gestrichelte Pfeile S42), sie ist jedoch auf jeden Fall Voraussetzung für den erfolgreichen Login bei S70.

Im Anschluss kann die gewünschte Transaktion zwischen Nutzer und Diensteanbieter erfolgen (S80).

Die Erfindung ermöglicht somit eine Nutzeridentifikation ausgehend von einem stationären Endgerät/Desktop-PC mittels eines mobilen Endgeräts, so dass eine Nutzeridentifikation auch an stationären Endgeräten möglich ist, die über keine Ausweiskarten-Leseeinrichtung verfügen.

## Patentansprüche

1. Verfahren zum Betreiben eines elektronischen Authentisierungsdienstes (eID) zur Authentisierung eines Nutzers gegenüber einem Diensteanbieter (DL) mittels eines elektronischen Ausweiselements (PA) des Nutzers mit den folgenden Schritten:
Empfangen (S50) einer Verbindungsanfrage von einem mobilen Nutzerendgerät (122) des Nutzers über einen Hyperlink (URL), wobei der Hyperlink (URL) Angaben zu einem von einem Server (130) des Diensteanbieters (DL) erzeugten Geheimnis (S) und einem dem Authentisierungsvorgang zugeordneten Identifizierer (ID) enthält, die von einem Diensteanbieter (DL) erzeugt wurden,
Genehmigen (S51) der Verbindungsanfrage und Übermitteln des Geheimnisses (S) an das mobile Nutzerendgerät (122),
Durchführen (S55) des Authentisierungsvorgangs unter Verwendung eines gesicherten Kanals zwischen dem elektronischen Ausweiselement und dem Authentisierungsdienst, einschließlich Empfangen der Bestätigung des Geheimnisses (S) durch den Nutzer,
Senden (S60), nach erfolgreicher Authentisierung, einer Authentisierungsbestätigung zusammen mit dem Identifizierer (ID) an den Server (130) des Diensteanbieters (DL) zum Öffnen eines personalisierten Zugangs für ein stationäres Nutzerendgerät (120) nach Bestätigung des Geheimnisses (S).

2. Verfahren nach Anspruch 1, bei dem der elektronische Authentisierungsdienst (eID) eine separate Bestätigung der Übereinstimmung des Geheimnisses (S) verlangt (S52).

3. Verfahren nach Anspruch 1 oder 2, bei dem der Server (130) des Diensteanbieters das Geheimnis auch an das stationäre Nutzerendgerät sendet (S41).

4. Verfahren nach Anspruch 3, bei dem der Nutzer eine Anzeige der Geheimnisse auf stationärem und mobilem Nutzerendgerät (120, 122) vergleicht und bei Übereinstimmung über das stationäre Nutzerendgerät (120) und/oder das mobile Nutzerendgerät (122) bestätigt (Schritte S42 bzw. S52).

5. Authentisierungseinrichtung, umfassend einen Authentisierungsserver (140) zur Authentisierung eines Nutzers gegenüber einem Diensteanbieter (DL) mittels eines elektronischen Ausweiselements (PA) des Nutzers und einen Server (130) des Diensteanbieters (DL), wobei der Server (130) des Diensteanbieters zum Öffnen eines personalisierten Zugangs für ein stationäres Nutzerendgerät (120) nach Bestätigung eines von dem Server (130) des Diensteanbieters (DL) erzeugten Geheimnisses (S) ausgebildet ist, und wobei der Authentisierungsserver (140) als elektronischer Authentisierungsdienst (eID) eingerichtet und dazu ausgebildet ist,
eine Verbindungsanfrage von einem mobilen Nutzerendgerät (122) des zu authentisierenden Nutzers über einen Hyperlink (URL) zu empfangen, wobei der Hyperlink (URL) Angaben zu einem Geheimnis (S) und einem dem Authentisierungsvorgang zugeordneten Identifizierer (ID) enthält, die von einem Diensteanbieter (DL) erzeugt wurden,
die Verbindungsanfrage zu genehmigen und das Geheimnis an das mobile Nutzerendgerät (122) zu übermitteln,
den Authentisierungsvorgang einschließlich Empfangen der Bestätigung des Geheimnisses (S) durch den Nutzer durchzuführen und
nach erfolgreicher Authentisierung eine Authentisierungsbestätigung zusammen mit dem Identifizierer (ID) an den Server (130) des Diensteanbieters zum Öffnen eines personalisierten Zugangs für ein stationäres Nutzerendgerät (120) nach Bestätigung des Geheimnisses (S) zu senden.

6. Computerprogramm mit Programmcodemitteln, um alle Schritte eines Verfahrens nach einem der Ansprüche 1 bis 4 durchzuführen, wenn das Computerprogramm in einer Authentisierungseinrichtung gemäß Anspruch 5 ausgeführt wird.

7. Computerprogramm nach Anspruch 6, das auf einem computerlesbaren Datenträger gespeichert ist.

## Claims

1. Method for operating an electronic authentication service (eID) for authenticating a user with respect to a service provider (DL) by means of an electronic ID element (PA) of the user, having the following steps of:
receiving (S50) a connection request from a mobile user terminal (122) of the user via a hyperlink (URL), wherein the hyperlink (URL) contains information regarding a secret (S) generated by a server (130) of the service provider (DL) and an identifier (ID) assigned to the authentication operation, which were generated by a service provider (DL),
approving (S51) the connection request and transmitting the secret (S) to the mobile user terminal (122),
carrying out (S55) the authentication operation using a secure channel between the electronic ID element and the authentication service, including receiving confirmation of the secret (S) by the user,
transmitting (S60), after successful authentication, an authentication confirmation together with the identifier (ID) to the server (130) of the service provider (DL) for opening a personalized access for a stationary user terminal (120) after confirmation of the secret (S).

2. Method according to Claim 1, wherein the electronic authentication service (eID) requires a separate confirmation of the match of the secret (S) (S52).

3. Method according to Claim 1 or 2, wherein the server (130) of the service provider also transmits the secret to the stationary user terminal (S41).

4. Method according to Claim 3, wherein the user compares a display of the secrets on the stationary and mobile user terminals (120, 122) and, in the event of a match, confirms the secrets via the stationary user terminal (120) and/or the mobile user terminal (122) (steps S42 or S52).

5. Authentication device, comprising an authentication server (140) for authenticating a user with respect to a service provider (DL) by means of an electronic ID element (PA) of the user, and a server (130) of the service provider (DL), wherein the server (130) of the service provider is configured to open a personalized access for a stationary user terminal (120) after confirmation of a secret (S) generated by the server (130) of the service provider (DL), and wherein the authentication server (140) is configured as an electronic authentication service (eID) and designed
to receive a connection request from a mobile user terminal (122) of the user to be authenticated via a hyperlink (URL), wherein the hyperlink (URL) contains information regarding a secret (S) and an identifier (ID) assigned to the authentication operation, which were generated by a service provider (DL),
approve the connection request and transmit the secret to the mobile user terminal (122),
carry out the authentication operation including receiving the confirmation of the secret (S) by the user, and
after successful authentication, send an authentication confirmation together with the identifier (ID) to the server (130) of the service provider for opening a personalized access for a stationary user terminal (120) after confirmation of the secret (S).

6. Computer program having program code means for carrying out all steps of a method according to any one of Claims 1 to 4 when the computer program is executed in an authentication device according to Claim 5.

7. Computer program according to Claim 6, which is stored on a computer-readable data carrier.

## Revendications

1. Procédé de fonctionnement d'un service d'authentification électronique (eID) destiné à authentifier un utilisateur auprès d'un prestataire de services (DL) au moyen d'un élément d'identification électronique (PA) de l'utilisateur, le procédé comprenant les étapes suivantes :
recevoir (S50) une demande de connexion provenant d'un terminal utilisateur mobile (122) de l'utilisateur au moyen d'un hyperlien (URL), l'hyperlien (URL) contenant des indications relatives à un code secret (S) généré par un serveur (130) du prestataire de services (DL) et à un identifiant (ID) attribué au processus d'authentification, lesquels ont été générés par un prestataire de services (DL),
approuver (S51) la demande de connexion et transmettre le code secret (S) au terminal utilisateur mobile (122),
réaliser (S55) le processus d'authentification à l'aide d'un canal sécurisé entre l'élément d'identification électronique et le service d'authentification, incluant la réception de la confirmation du code secret (S) par l'utilisateur,
envoyer (S60), après authentification réussie, une confirmation d'authentification conjointement avec l'identifiant (ID) au serveur (130) du prestataire de services (DL) pour ouvrir un accès personnalisé pour un terminal utilisateur fixe (120) après confirmation du code secret (S).

2. Procédé selon la revendication 1, dans lequel le service d'authentification électronique (eID) requiert une confirmation séparée de la concordance du code secret (S) (S52).

3. Procédé selon l'une des revendications 1 ou 2, dans lequel le serveur (130) du prestataire de services transmet également le code secret au terminal utilisateur fixe (S41).

4. Procédé selon la revendication 3, dans lequel l'utilisateur compare une affichage des codes secrets sur les terminaux utilisateurs fixe et mobile (120, 122) et, en cas de concordance, confirme les codes secrets par le biais du terminal utilisateur fixe (120) et/ou du terminal utilisateur mobile (122) (étapes S42 ou S52).

5. Dispositif d'authentification, comprenant un serveur d'authentification (140) destiné à authentifier un utilisateur auprès d'un prestataire de services (DL) au moyen d'un élément d'identification électronique (PA) de l'utilisateur, et un serveur (130) du prestataire de services (DL), le serveur (130) du prestataire de services étant conçu pour ouvrir un accès personnalisé pour un terminal utilisateur fixe (120) après confirmation d'un code secret (S) généré par le serveur (130) du prestataire de services (DL), et le serveur d'authentification (140) étant conçu comme un service d'authentification électronique (eID) et étant agencé pour :
recevoir une demande de connexion provenant d'un terminal utilisateur mobile (122) de l'utilisateur à authentifier au moyen d'un hyperlien (URL), l'hyperlien (URL) contenant des indications relatives à un code secret (S) et à un identifiant (ID) attribué au processus d'authentification, qui ont été générés par un prestataire de services (DL),
approuver la demande de connexion et transmettre le code secret au terminal utilisateur mobile (122),
réaliser le processus d'authentification, y compris la réception de la confirmation du code secret (S) par l'utilisateur, et
après authentification réussie, envoyer une confirmation d'authentification conjointement avec l'identifiant (ID) au serveur (130) du prestataire de services pour ouvrir un accès personnalisé pour un terminal utilisateur fixe (120) après confirmation du code secret (S).

6. Logiciel comprenant des moyens de code de programme pour réaliser toutes les étapes d'un procédé selon l'une quelconque des revendications 1 à 4 lorsque le logiciel est exécuté dans un dispositif d'authentification selon la revendication 5.

7. Logiciel selon la revendication 6, qui est mémorisé sur un support de données lisible par ordinateur.
